# EUROPÄISCHE PATENTSCHRIFT

(11) **EP 0 407 830 B1**
(45) Veröffentlichungstag und Bekanntmachung des Hinweises auf die Patenterteilung: **25.09.1996**
(21) Anmeldenummer: 90112402.4
(22) Anmeldetag: 29.06.1990
(51) Int. Cl.: G02B 5/30, H04N 9/31, G02F 1/00

(54) **Polarisator**
Polarizer
Polariseur

(30) Priorität: 10.07.1989 CH 2562/89; 01.11.1989 CH 3948/89; 15.05.1990 CH 1641/90
(43) Veröffentlichungstag der Anmeldung: 16.01.1991
(73) Patentinhaber: F. HOFFMANN-LA ROCHE AG, 4002 Basel (CH); NIOPIC MOSCOW RESEARCH AND PRODUCTION ASSOCIATION, Moskau 103787 (SU)
(72) Erfinder: Barnik, Mikhail Ivanovich, Dr., Dolgoprudny, 141700, Moscow Region (SU); Belyaev, Sergey Vasilievich, Dr., Dolgoprudny, 141700 Moscow Region (SU); Fünfschilling, Jürg, Dr., CH-4054 Basel (CH); Malimonenko, Nikolai, Lobnya, 141730, Moscow Region (SU); Schadt, Martin, Dr., CH-4411 Seltisberg (CH); Schmitt, Klaus, Dr., D-7850 Lörrach (DE)
(74) Vertreter: Buntz, Gerhard

(56) Entgegenhaltungen:
- US-A- 4 073 571
- IEEE TRANSACTIONS ON ELECTRON DEVICES, Band ED21, Nr. 2, Februar 1974, Seiten 171-172; S. SATO et al.: "Liquid-crystal color light valve"

## Beschreibung

Die Erfindung betrifft einen Polarisator.

Mit dem Begriff Polarisator wird eine optische Vorrichtung bezeichnet, die polarisiertes Licht oder von natürlichem Licht Anteile mit einem bestimmten Polarisationszustand passieren lässt und andere Anteile blockiert. In einem engeren Sinn ist ein Polarisator also eine Vorrichtung zur Erzeugung von polarisiertem Licht aus natürlichem Licht. Unter natürlichem Licht wird dabei unpolarisiertes Licht verstanden und zwar weisses, farbiges oder monochromatisches Licht. Unter einem Analysator versteht man einen zur Analyse von Licht auf seinen Polarisationszustand eingesetzten Polarisator.

Der am weitesten verbreitete Polarisator ist der Folienpolarisator zur Erzeugung von linear polarisiertem Licht. Diese Polarisatoren haben den Nachteil, dass prinzipiell die Hälfte des einfallenden natürlichen Lichts verlorengeht.

Ein Polarisator, der mehr als die Hälfte des einfallenden Lichts als polarisiertes Licht liefern würde, wäre ein erheblicher technischer Fortschritt.

In US-A-4,073,571 ist eine zirkular polarisiertes Licht erzeugende Einrichtung beschrieben, die einfallendes oder von einer üblichen Lichtquelle erzeugtes unpolarisiertes Licht fast vollständig in zirkular polarisiertes Licht umwandelt. Diese Einrichtung beruht auf der Eigenschaft von cholesterischen Flüssigkristallen, in einem für eine jeweilige Mischung charakteristischen Wellenlängenbereich einen Teil des einfallenden Lichts zu reflektieren. Das reflektierte Licht ist zirkularpolarisiert, der transmittierte Anteil in diesem Wellenlängenbereich ebenfalls, aber mit umgekehrtem Drehsinn. Der Lichtanteil ausserhalb des charakteristischen Wellenlängenbereichs wird unverändert transmittiert. Durch Umkehrung des Drehsinns, z.B. an einem Spiegel, kann der reflektierte Strahl erneut durch den Flüssigkristall geschickt werden und passiert diesen nun ungeschwächt. Zusammen mit dem bereits transmittierten Anteil ergibt sich einheitlich zirkular polarisiertes Licht mit im wesentlichen der Intensität des einfallenden Lichts im bestimmten Wellenlängenbereich. Für einen Breitbandpolarisator dieser Art für weisses Licht, sind mehrere Flüssigkristallschichten mit verschiedenen Wellenlängenbereichen hintereinandergeschaltet.

Diese bekannte Einrichtung stellt im Prinzip eine wesentliche Verbesserung gegenüber Polarisatoren dar, bei denen grundsätzlich die Hälfte des Lichts durch Absorption verloren geht. Allerdings ist diese Einrichtung für eine praktische Anwendung wenig geeignet, weil sie empfindliche und schwer zu handhabende optische Elemente wie Linsen, geknickte Spiegel etc., enthält.

Der Erfindung liegt daher die Aufgabe zugrunde, einfache und technisch brauchbare Polarisatoren und Anwendungen derselben aufgrund dieses Prinzips vorzuschlagen.

Erfindungsgemäss wird dies durch einen Polarisator und ein Projektionssystem gelöst, die sich durch die in den Ansprüchen angegebenen Merkmale auszeichnen.

Im folgenden sind anhand der beiliegenden Zeichnungen Ausführungs- und Anwendungsbeispiele der Erfindung beschrieben. Es zeigen:
- Fig. 1: eine schematische Darstellung des Funktionsprinzips der Erfindung
- Fig. 2: eine Lichtquelle zur Erzeugung von polarisiertem Licht
- Fig. 3: eine alternative Form einer Lichtquelle zur Erzeugung von polarisiertem Licht
- Fig. 4: eine Anwendung einer Lichtquelle nach Fig. 2 in einem Scheinwerfer
- Fig. 5: eine Vorrichtung zur Umwandlung eines unpolarisierten, monochromatischen Lichtstrahls in polarisiertes Licht
- Fig. 6: eine Vorrichtung zur Umwandlung von unpolarisiertem, weissem Licht in polarisiertes weisses Licht
- Fig. 7: einen Dreifarben-Analysator
- Fig. 8: eine alternative Form eines Dreifarbenanalysators
- Fig. 9: ein monochromes Projektionssystem
- Fig. 10: eine Anwendung der Erfindung in einem Farbprojektionssystem
- Fig. 11: eine alternative Form eines Farbprojektionssystems
- Fig. 12: eine weitere alternative Form eines Farbprojektionssystems
- Fig. 13: eine alternative Form eines Farbprojektionssystems
- Fig. 14-18: verschiedene Betriebsarten von Flüssigkristallzellen mit den neuen Polarisatoren.
- Fig. 19: ein in Reflexion arbeitendes Projektionssystem

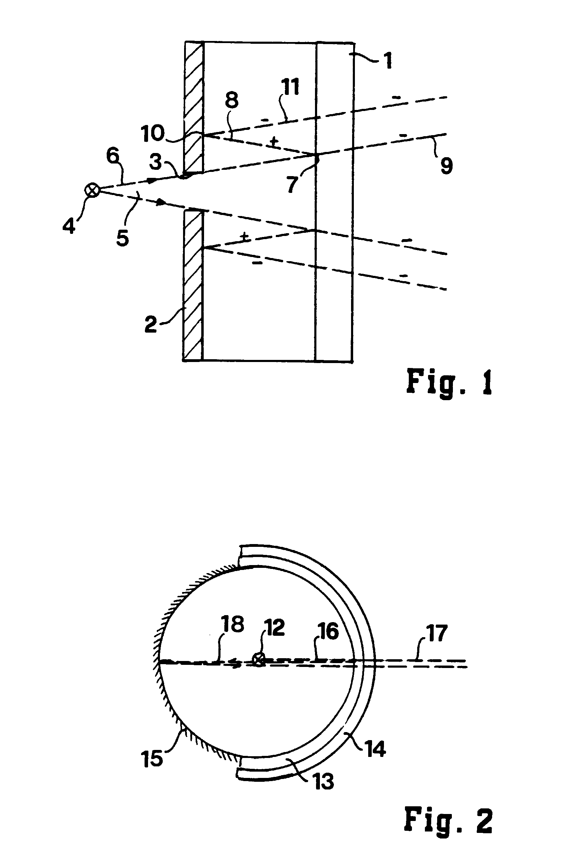

In Fig. 1 ist eine Ausführungsform der Erfindung gezeigt, und zwar ein Polarisator in stark vereinfachter, schematischer Darstellung, anhand der das Funktionsprinzip erläutert wird. Der Polarisator besteht aus einer Schicht 1 aus einem cholesterischen Flüssigkristall. Der Flüssigkristall befindet sich in der sog. Grandjean-Struktur, d.h. seine Moleküle sind durch geeignete Randbedingungen im wesentlichen planar orientiert. Diese Randbedingungen werden in an sich bekannter Weise an den Oberflächen der den Flüssigkristall einschliessenden Platten, beispielsweise durch Reiben, erzeugt. In Fig. 1 sind diese an sich bekannten Elemente aus Gründen der Vereinfachung nicht gezeigt. Die Flüssigkristallschicht ist eben.

Orientierte cholesterische Flüssigkristallschichten reflektieren im wesentlichen nur in einem Wellenlängenbereich, für den die Wellenlänge etwa gleich der Ganghöhe der cholesterischen Schraube ist (aktiver Wellenlängenbereich) . Die spektrale Breite dieses Reflexionsbereichs kann in bekannter Weise durch geeignete Wahl des Flüssigkristalles variiert werden. Das reflektierte Licht ist vollständig zirkular polarisiert. Welche Drehrichtung des zirkular polarisierten Lichts reflektiert wird, hängt vom Drehsinn der cholesterischen Schraube ab. Die entgegengesetzt drehende Polarisation wird ungeschwächt transmittiert.

Parallel zur Flüssigkristallschicht und im Abstand von ihr angeordnet befindet sich ein konventioneller Spiegel 2 der eine Blende 3 besitzt. Durch die Blende 3 kann ein von einer monochromatischen Lichtquelle 4 kommendes Lichtbündel 5 in das System einfallen. Der Strahlenverlauf und die Zustandsänderungen des einfallenden Lichts werden im folgenden anhand eines der Randstrahlen 6 erläutert.

Der Strahl 6 trifft im Punkt 7 auf die Flüssigkristallschicht. Dort wird zirkular polarisiertes Licht reflektiert, und zwar abhängig vom Drehsinn der Flüssigkristallschicht rechts- oder linksdrehend zirkular (im folgenden kurz rechtszirkular bzw. linkszirkular) polarisiertes Licht. In den Figuren der Zeichnungen ist die Drehrichtung rechts mit "+" und links mit "-" angegeben. Der reflektierte Strahl 8 sei also beispielsweise rechtszirkular polarisiert, das Licht mit dem umgekehrten Drehsinn wird ungeschwächt transmittiert. Der Strahl 9 ist also linkszirkular polarisiert. Der Strahl 8 gelangt auf den Reflektor 2 und wird dort im Punkt 10 reflektiert. Bei der Reflexion wird bekanntlich der Drehsinn der Polarisation (nachfolgend kurz Polarisationsrichtung) umgedreht, sodass der reflektierte Strahl 11 nunmehr linkszirkular polarisiert ist und aufgrund dieser Eigenschaft ebenso wie der Strahl 9 ungeschwächt von der Flüssigkristallschicht 1 transmittiert wird. Die Strahlen 11 und 9 zusammen entsprechen praktisch der gesamten Intensität des einfallenden Strahls 6 wenn dessen Spektralbreite und -lage mit jener der cholesterischen Flüssigkristalls übereinstimmen. Damit hat eine praktisch verlustlose Polarisation stattgefunden. Selbstverständlich gilt der Polarisationsvorgang nicht nur für den Randstrahl 6, sondern für das gesamte Lichtbündel 5. Das gesamte austretende Bündel ist somit einheitlich zirkular polarisiert. Wenn linear polarisiertes Licht gewünscht wird, so ist dies ohne weiteres möglich. Mit Hilfe einer λ/4-Platte kann bekanntlich verlustlos linear polarisiertes Licht aus zirkular polarisiertem Licht hergestellt werden. Hinter die in Fig. 1 gezeigte Anordnung kann somit eine (nicht gezeigte) λ/4-Platte gesetzt werden, um linear polarisiertes Licht zu erzielen.

Wenn die cholesterische Schicht 1 durch mehrere cholesterische Schichten mit verschiedener spektraler Selektivität ersetzt wird, so kann auf diese Weise ein Polarisator für weisses Licht verwirklicht werden. Ein mehrschichtiger Flüssigkristall lässt sich vorteilhaft mit polymeren Flüssigkristallen verwirklichen.

In Fig. 2 ist eine Lichtquelle zur Erzeugung von polarisiertem Licht gezeigt. Im Zentrum einer kugelförmigen Anordnung befindet sich eine Lichtquelle 12 zur Erzeugung von unpolarisiertem Licht. Die kugelförmige Anordnung umfasst auf einem (nicht gezeigten) kugelförmigen Träger eine cholesterische Flüssigkristallschicht 13 mit einer ersten spektralen Selektivität und eine zweite Flüssigkristallschicht mit einer zweiten spektralen Selektivität. Die beiden Flüssigkristallschichten liegen in ihrer spektralen Selektivität so, dass insgesamt weisses Licht zustande kommt. Die andere Halbkugel des Trägers ist mit einer Spiegelbeschichtung 15 versehen. Das von der Lichtquelle ausgesandte Licht 16 gelangt auf die innere Flüssigkristallschicht 13 und wird dort nach Polarisation getrennt, transmittiert oder reflektiert. Der transmittierte Strahl 17 ist also zirkular polarisiert und besitzt eine der Selektivität der Flüssigkristallschicht 13 entsprechende spektrale Zusammensetzung. An der zweiten Flüssigkristallschicht 14 findet eine weitere Aufspaltung in Transmission mit einer Polarisation und Reflexion mit der entgegengesetzten Polarisation statt. Bei geeigneter Auswahl der Flüssigkristallschichten kann mit diesen beiden Schichten ein grosser Teil des gesamten Spektrums in dieser Form aufgespalten werden, sodass annährend weisses Licht erzeugt wird. Dies kann aber natürlich durch eine oder mehrere weitere Flüssigkristallschichten noch verbessert werden. Die reflektierten Strahlen 18 gelangen auf den jenseits der Lichtquelle 12 befindlichen metallischen Spiegel 15 und werden dort reflektiert. Bei der Reflexion wird die Polarisationsrichtung umgedreht, sodass das reflektierte Licht nunmehr den gleichen Drehsinn aufweist wie das bereits transmittierte Licht. Es kann also ungeschwächt durch die Flüssigkristallschichten 13, 14 gelangen.

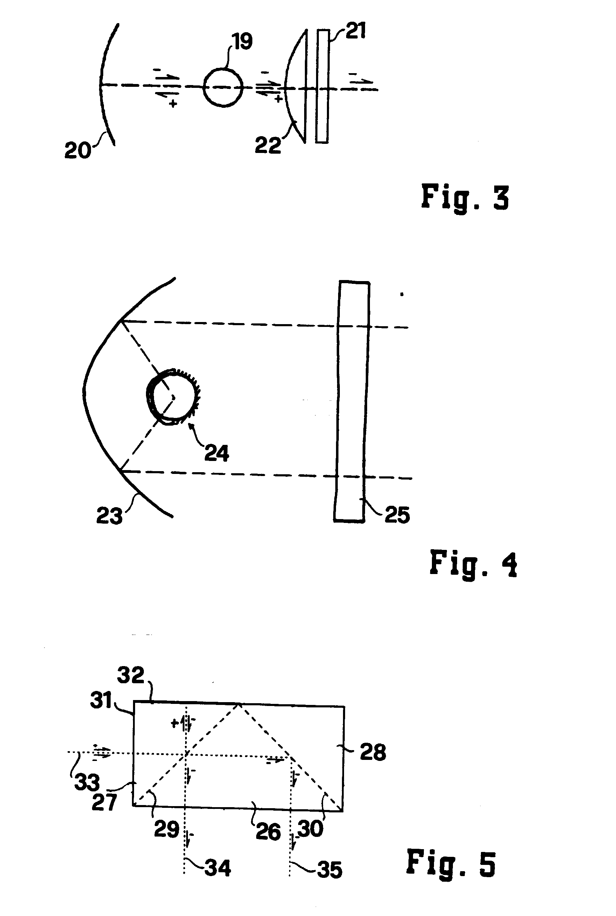

Eine alternative Ausführungsform ist in Fig. 3 gezeigt. Eine monochromatische Lichtquelle 19 befindet sich ungefähr im Mittelpunkt eines kugelförmigen Hohlspiegels 20. Auf der gegenüberliegenden Seite befindet sich eine cholesterische Flüssigkristallschicht 21, die in diesem Fall nicht kugelförmig, sondern eben ist. Dies vereinfacht das Orientieren des Flüssigkristalls, da die planare Wandorientierung an einer ebenen Fläche einfacher ist, als an einer Kugelfläche. Allerdings werden durch eine ebene Flüssigkristallschicht die Abbildungsfehler grösser. Zwischen Lichtquelle und Flüssigkristallschicht ist eine plankonvexe Linse 22 angeordnet. Im praktischen Fall kann die Flüssigkristallschicht direkt auf der planen Seite der Linse aufgebracht werden.

Die Funktion dieser Ausführungsform ist prinzipiell gleich wie die der vorher beschriebenen. Die Lichtquelle erzeugt unpolarisiertes Licht, das entweder direkt oder nach Reflexion am Spiegel 20 durch die Linse 22 auf die Flüssigkristallschicht 21 gelangt. Dort wird der in dieser Figur mit einem Pfeil mit Minuszeichen bezeichnete linkszirkular polarisierte Anteil transmittiert. Der mit Pfeil und "+" bezeichnete, rechtszirkulare Anteil wird reflektiert und gelangt zum Spiegel 20. Bei der Spiegelung erfährt dieser Anteil eine Polarisationsumkehr nach linkszirkular und kann somit die Flüssigkristallschicht 21 auch passieren. Wiederum wird praktisch das gesamte Licht einheitlich polarisiert. Im Fall einer weissen Lichtquelle würde der nicht passende Spektralanteil ebenfalls transmittiert. Wenn auch dieser Spektralanteil polarisiert werden soll, müssen weitere Flüssigkristallschichten mit aufeinander abgestimmten spektralen Selektivitäten hinzugefügt werden.

Eine vorteilhafte Verwendung einer derartigen Lichtquelle in einem Scheinwerfer ist in Fig. 4 schematisch dargestellt. Im Brennpunkt eines Parabolspiegels 23 ist eine Lichtquelle gemäss Fig. 2 angeordnet. Ihre Flüssigkristallschicht 24 ist dem Spiegel zugewandt. Sie kann aus mehreren einzelnen Schichten mit unterschiedlicher spektraler Selektivität aufgebaut sein, um polarisiertes weisses Licht zu erzeugen. Das gesamte polarisierte Licht gelangt auf den Parabolspiegel 23 und wird als paralleles Bündel in die Abstrahlrichtung, d.h. in Fig. 4 nach rechts geworfen. Die Frontscheibe 25 des Scheinwerfers ist eine λ/4-Platte, die das zirkular polarisierte Licht in linear polarisiertes umwandelt.

Durch die erfindungsgemässe Lichtquelle mit nahezu 100%iger Ausbeute an polarisiertem Licht ist es erstmals möglich einen infolge der Polarisation blendfreien leistungsfähigen Kraftfahrzeugscheinwerfer zu bauen.

Fig. 5 zeigt einen Polarisator, mit dem aus einem kollimierten weissen Lichtstrahl oder einem Laserstrahl ein zirkular polarisiertes Wellenlängenband ausgekoppelt werden kann. Dabei wird in diesem selektierten Wellenlängenbereich das gesamte Licht des einfallenden Strahls in polarisiertes Licht umgewandelt. Das restliche Licht wird ungeschwächt transmittiert und kann durch weitere gleichartige Polarisatoren mit anderen selektiven Wellenlängenbereichen weiterverwendet werden.

Der Polarisator besteht aus drei rechtwinklig-gleichschenkligen Prismen 26, 27, 28. Sie sind so zusammengesetzt, dass zwischen ihnen jeweils Schichten 29, 30 aus cholesterischem Flüssigkristall angeordnet sind. Das mittlere Prisma 26 ist grösser als die beiden anderen Prismen 27, 28, und zwar sind die Kathetenflächen des mittleren Prismas 26 gleich gross wie die Hypothenusenflächen der beiden anderen Prismen 27 und 28. Das eingangsseitige Prisma 27, hat eine Kathetenfläche 31, die zur Hypothenusenfläche des grossen Prismas 26 senkrecht steht und durch die das Licht einfällt. Die andere Kathetenfläche 32 des eingangsseitigen Prismas 27 ist mit einer metallischen Beschichtung versehen, d.h. verspiegelt. Die Flüssigkristallschichten können auch anders als zwischen Prismen angeordnet werden, beispielsweise durch geeignet angeordnete plane Schichten in Küvetten (Zellen) oder Polymerbeschichtungen auf Platten etc.

Der einfallende kollimierte Lichtstrahl 33 ist unpolarisiert, d.h. sein Licht kann als Ueberlagerung von links-und rechtszirkular polarisiertem Licht betrachtet werden. Dies ist durch Pfeile und "-" für links- bzw. "+" für rechtszirkular polarisiertes Licht dargestellt. Das einfallende Licht 33 gelangt zur ersten Flüssigkristallschicht 29, die beispielsweise so gewählt wurde, dass sie rechtzirkular polarisiertes Licht reflektiert. Das reflektierte Licht gelangt zum Spiegel 32 und erleidet bei der Reflexion an diesem Spiegel eine Umkehr der Polarisationsrichtung. Das nunmehr linkspolarisierte Licht kann die erste Flüssigkristallschicht 29 ungehindert passieren und verlässt die Vorrichtung als linkszirkular polarisierter Strahl 34. Der linkszirkular polarisierte Anteil des einfallenden Lichts passiert die erste Flüssigkristallschicht 29 und gelangt auf die zweite Flüssigkristallschicht 30. Die zweite Flüssigkristallschicht 30 ist so gewählt, dass sie etwa dieselbe spektrale Selektivität, aber den umgekehrten Drehsinn wie die erste Flüssigkristallschicht 29 aufweist. Dadurch wird nunmehr das von der ersten Flüssigkristallschicht 29 durchgelassene linkszirkular polarisierte Licht an der zweiten Flüssigkristallschicht 30 reflektiert und verlässt den Polarisator ebenfalls als linkszirkular polarisierter Strahl 35 parallel zu dem ersten reflektierten Strahl 34 auf der Ausgangsseite.

Das den Polarisator nach unten verlassende Licht 34, 35 ist einheitlich linkspolarisiert und umfasst praktisch das gesamte im ausgewählten Spektralbereich zur Verfügung stehende Licht. Das ausserhalb des Spektralbereichs liegende Licht im einfallenden Strahl 33 passiert die Anordnung ungeschwächt und verlässt sie durch das Prisma 28 in der Figur nach rechts.

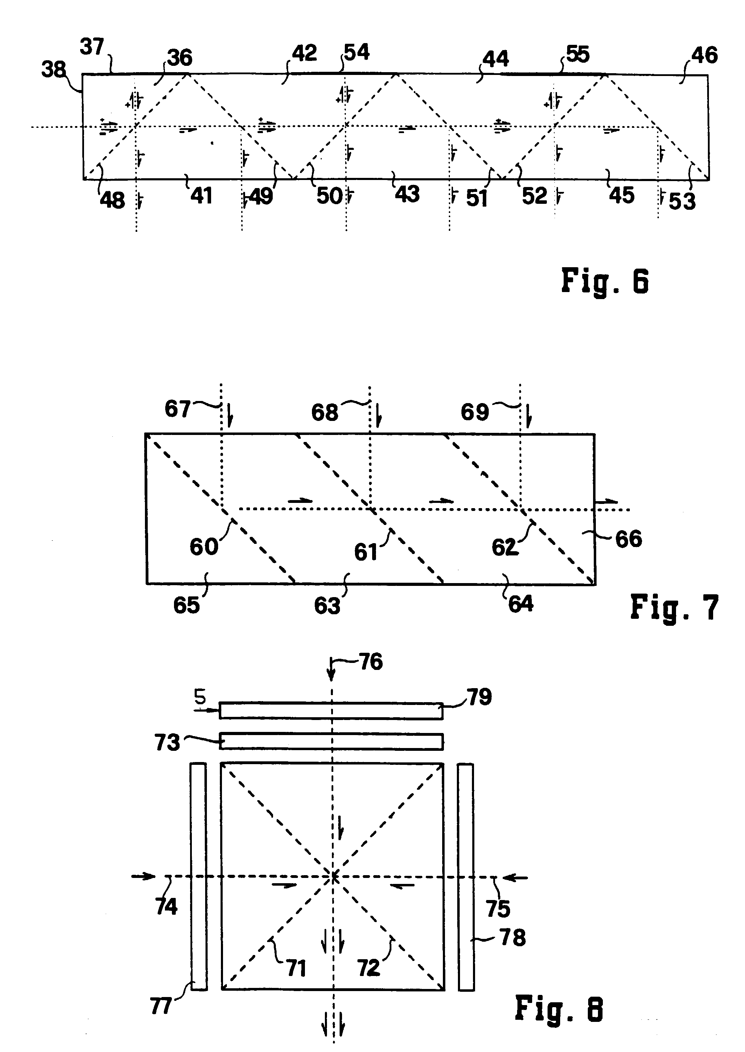

Wie bereits erwähnt, kann das den Polarisator unpolarisiert verlassende Licht mit den vom Polarisator nicht verwendbaren Spektralanteilen weiteren gleichartigen Polarisatoren mit anderen spektralen Selektivitäten zugeführt werden. Anstatt mehrere Polarisatoren gemäss Fig. 5 hintereinander anzuordnen, kann eine Anordnung zur Erzeugung von polarisiertem Licht in drei Spektralbereichen wie in Fig. 6 gezeigt aus sieben Prismen aufgebaut werden. Bei dieser Anordnung handelt es sich im Prinzip um eine Serienschaltung dreier Polarisatoren gemäss Fig. 5. Sie besteht aus fünf gleichgrossen Prismen 41-45, die mit ihren Kathetenflächen aneinandergefügt sind und zwischen ihren Berührungsflächen jeweils Flüssigkristallschichten 49-52 enthalten. An der Kathetenfläche des ersten Prismas 41, die dem zweiten Prisma 42 abgewandt ist, ist ein kleineres Prisma 36 angeordnet, dessen Hypothenusenfläche den Kathetenflächen der grösseren Prismen 41-45 entspricht. Die zu den Hypothenusenflächen der grösseren Prismen parallele Kathethenfläche 37 des kleineren Prismas 36 ist verspiegelt. Seine andere Kathetenfläche 38 ist die Eingangsseite für das Licht. Zwischen diesem eingangsseitigen Prisma 36 und dem ersten grösseren Prisma 41 ist ebenfalls eine Flüssigkristallschicht 48 angeordnet.

Ebenso ist auf der Ausgangsseite auf der freien Kathetenfläche des letzten grossen Prismas 45 ein kleineres rechtwinklig-gleichschenkliges Prisma 46 angebracht zwischen dessen Hypothenusenfläche und der Kathetenfläche des letzten grossen Prismas 45 ebenfalls eine Flüssigkristallschicht 53 vorhanden ist. Die Anordnung besitzt also 6 Flüssigkristallschichten 48-53. Die Flüssigkristallschichten haben jeweils paarweise die gleiche Wellenlängenselektivität und pro Paar entgegensetzte Polarisationseigenschaften.

Die in einer Ebene mit der verspiegelten Fläche des eingangsseitigen kleinen Prismas 36 liegenden oberen Flächen des zweiten und des vierten grösseren Prismas weisen ebenfalls Verspiegelungen 54, 55 auf.

Auch in dieser Anordnung können anstelle der Prismen cholesterische Schichten zwischen oder auf planen Platten verwendet werden.

Die Farbfolge hängt von der beabsichtigten Anwendung ab. Da die Flüssigkristallschichten für langwelliges Licht bessere Transmission zeigen als für kurzwelliges, empfiehlt es sich, das kurzwelligere Licht zuerst auszukoppeln.

Das einfallende weisse Licht ist unpolarisiert und gelangt durch das eingangsseitige Prisma 36 auf die erste Flüssigkristallschicht 48, die beispielsweise rechtspolarisiertes Licht des blauen Spektralanteils reflektiert und dessen linkspolarisierten Anteil passieren lässt. Ausserdem werden die anderen Spektralanteile durchgelassen. Das reflektierte Licht wird am Spiegel 37 reflektiert und dabei in seiner Polarisationsrichtung umgedreht. Das nunmehr linkspolarisierte Licht kann die erste Flüssigkristallschicht 48 passieren und verlässt die Anordnung auf der in Fig. 6 nach unten gerichteten Ausgangsseite. Das durchgelassene linkspolarisierte Licht wird an der zweiten Flüssigkristallschicht 49 mit dem gleichen Wellenlängenbereich reflektiert und verlässt die Anordnung ebenfalls auf der Ausgangsseite. Die beiden die Anordnung auf der Ausgangsseite verlassenden Strahlen sind einheitlich linkszirkular polarisiert und stellen den gesamten Blauanteil des einfallenden Lichts dar. Der restliche Spektralanteil des Lichts gelangt weiter zur dritten Flüssigkristallschicht 50, an der wiederum der rechtspolarisierte Anteil des grünen Spektralbereichs reflektiert, der linkspolarisierte Anteil durchgelassen wird. Das reflektierte grüne Licht wird am Spiegel 54 erneut reflektiert und erleidet eine Umkehrung der Polarisationsrichtung, sodass es als linkszirkular polarisiertes Licht die Anordnung nach unten verlassen kann. Das durchgelassene grüne Licht wird an der Flüssigkristallschicht 51 reflektiert und verlässt die Anordnung ebenfalls nach unten. Die beiden Strahlen sind einheitlich links polarisiert und stellen den gesamten Grünanteil des einfallenden Lichtes dar. Der verbleibende Rotanteil des Lichts gelangt zu den beiden letzten Flüssigkristallschichten 52, 53 an denen wiederum die gleichen Vorgänge ablaufen. Am Ende ist das gesamte Licht in drei Spektralbereiche aufgeteilt und einheitlich linkspolarisiert. Wenn die drei Spektralbereiche so gewählt werden, dass sie das gesamte sichtbare Spektrum abdecken, so geht praktisch kein Licht verloren.

Eine einzelne cholesterische Flüssigkristallschicht spaltet im aktiven Wellenlängenbereich das Licht in einen vollständig in einem Sinne zirkular polarisiertes transmittierten und in einen vollständig im entgegengesetzten Sinn zirkular polarisierten reflektierten Anteil auf. Man kann also eine solche Schicht in Analogie zum Polarisator auch in Transmission und in Reflexion als Analysator für zirkular polarisiertes Licht benutzen. In Transmission wird dabei nur das Licht im aktiven Wellenlängenbereich beeinflusst, d.h. die Selektion des Wellenlängenbereichs muss durch ein anderes optisches Element erreicht werden. In Reflexion wird nur der aktive Wellenlängenbereich reflektiert, d.h. die Schicht wirkt zusätzlich noch als wellenlängenselektiver Spiegel.

Die Eigenschaft der selektiven Reflexion eignet sich dazu, die Funktionen Analysator, Wellenlängenselektor und Strahlzusammenführung zu vereinigen. Eine entsprechende Vorrichtung ist in Fig. 7 gezeigt. Der Analysator besteht im wesentlichen aus drei cholesterischen Flüssigkristallschichten 60-62 die parallel zueinander und unter 45° zur Einfallsrichtung des Lichts im Abstand voneinander angeordnet sind. Sie besitzen unterschiedliche Wellenlängenselektivität und gleichen Drehsinn, d.h. sie reflektieren z.B. alle drei nur rechtszirkular polarisiertes oder alle drei nur linkszirkular polarisiertes Licht. Die Anordnung ist aus zwei Prismen 63, 64 mit parallelogrammförmigem Querschnitt und zwei rechtwinklig-gleichschenkligen Prismen 65, 66 zusammengesetzt. Alternativ wäre es auch hier wieder möglich, Flüssigkristallzellen zwischen Glasplatten (Küvetten) oder flüssigkristalline Polymerschichten auf Glasplatten schräg in einem Halter anzuordnen.

Die Flüssigkristallschicht 60 reflektiere z.B. rechtszirkular polarisiertes Licht im Spektralbereich blau. Wenn das einfallende Bündel 67 diesem Spektralbereich entspricht und rechtszirkular polarisiert ist, wird es vollständig reflektiert und gelangt durch die anderen beiden Flüssigkristallschichten 61 und 62 unbeeinflusst zur Ausgangsseite des Analysators. Das gleiche gilt für die Bündel 68 und 69 für die Spektralbereiche grün und rot. Sofern die Bündel 67, 68 und 69 andere Farbanteile oder andere Polarisationsanteile besitzten, so werden diese Anteile nicht reflektiert sondern werden durch die Flüssigkristallschichten durchgelassen. Für diese Anteile ist also der Analysator in Richtung des einfallenden Licht voll durchlässig.

Eine weitere Form eines Dreifarben-Analysators ist in Fig. 8 gezeigt. Bei diesem Analysator arbeiten zwei Flüssigkristallschichten in Reflexion und eine dritte in Transmission. Die beiden in Reflexion arbeitenden cholesterischen Flüssigkristallschichten 71, 72 befinden sich zwischen den aneinandergefügten Kathetenflächen von vier Prismen die zu einer Art Würfel zusammengesetzt sind. Die Lichtbündel für die drei Grundfarben fallen hier nicht parallel zueinander ein, sondern aus drei verschiedenen Richtungen. Das Bündel 74 für die Farbe blau kommt in der Zeichnung von links und wird an der Flüssigkristallschicht 72 reflektiert. Das Bündel 75 für den roten Bereich kommt in der Zeichnung von rechts und wird an der Flüssigkristallschicht 71 reflektiert. Die Farbe grün kommt in der Zeichnung von oben und wird von der Flüssigkristallschicht 73 transmittiert. Wenn also alle drei Farben gleichsinnig polarisiert sind, muss die Flüssigkristallschicht 73 den umgekehrten Drehsinn aufweisen, wie die Flüssigkristallschichten 71 und 72. Ausserdem muss für das grüne Bündel 76 eine vorherige Eliminierung falscher Spektralanteile getroffen werden, weil diese sich sonst mit dem ausgehenden Licht mischen könnten. Für die Farben blau und rot ist dies nicht der Fall, da falsche Spektralanteile an den jeweiligen Flüssigkristallschichten nicht reflektiert werden.

Im Strahlengang der drei Lichtbündel 74-76 befinden sich Flüssigkristallzellen zur Modulation der Lichtbündel. Die Funktion dieser Modulation wird im folgenden für Projektionssysteme beschrieben.

Projektionssysteme mit Flüssigkristallen sind bekannt. Sie bestehen aus einer Lichtquelle, einer Polarisator-Einrichtung, einer Flüssigkristallanzeigezelle, einer Analysator-Einrichtung und einem Projektionsobjektiv. Für Farbprojektionen können noch Farbfilter dazu kommen, die aus dem Licht der Lichtquelle z.B. die drei Grundfarben ausfiltern. Je nach dem in der Flüssigkristallzelle verwendeten elektrooptischen Effekt kann der Analysator auch wegfallen (z.B. beim Guest-Host-Effekt). Ueblicherweise wird das Licht in drei getrennte Strahlengänge aufgespalten in deren jedem sich eine Flüssigkristallanzeigezelle zur Modulation des Lichts befindet. Die drei Lichtbündel werden danach mit drei Projektionsobjektiven auf der Projektionsleinwand überlagert oder zuerst zusammengeführt und mit einem einzigen Objektiv projiziert.

Als Flüssigkristallanzeigezellen kommen alle bisher bewährten Typen in Frage, so z.B. Drehzellen (TN), hochverdrillte Zellen (STN, SBE), DHF-Zellen, SSFLC-Zellen, Guest-Host-Zellen, DAP-Zellen, ECB-Zellen, etc. Alle diese Zellen werden üblicherweise mit linear polarisiertem Licht betrieben. Die meisten Zellen bewirken eine spannungsabhängige Phasenverschiebung zwischen den beiden Polarisationsrichtungen die durch die Linearpolarisatoren vorgegeben sind.

Die hier beschriebenen Polarisatoren und Analysatoren eignen sich hervorragend für solche Projektionssysteme. Sofern mit linear polarisiertem Licht gearbeitet werden soll, kann das zirkular polarisierte Licht in Kombination mit einer sogenannten λ/4-Platte in linear polarisiertes Licht umgewandelt werden, bevor es auf die Flüssigkristallanzeige gelangt. Hinter der Flüssigkristallanzeige vor dem Analysator muss dann wiederum eine λ/4-Platte eingeschaltet werden, um wieder zu zirkular polarisiertem Licht zu gelangen. Einfacher gestaltet sich aber der Aufbau, wenn direkt mit zirkular polarisiertem Licht gearbeitet werden kann, weil dadurch die beiden zusätzlichen λ/4-Platten vermieden werden können.

Wegen der hervorragenden Lichtausbeute der hier beschriebenen Projektionssysteme sind diese allen bekannten Projektionssystemen überlegen. Dies kann mit Vorteil für die grossflächige Projektion von Flüssigkristallanzeigen, z.B. für die Video- und Fernsehprojektion angewendet werden.

Bei Betrieb mit zirkular polarisiertem Licht sind bei einigen der genannten Flüssigkristallanzeigezellen Modifikationen der Zellparameter nötig, nämlich dann wenn eine Drehung der Polarisationsrichtung stattfindet (Modenführung durch die Helix). Dieser Anteil des elektrooptischen Effektes wird mit zirkular polarisiertem Licht nicht ausgenutzt. Er beeinflusst jedoch die Position der Polarisatoren und die beste Wahl des Verhältnisses der Doppelbrechung zur Zellendicke.

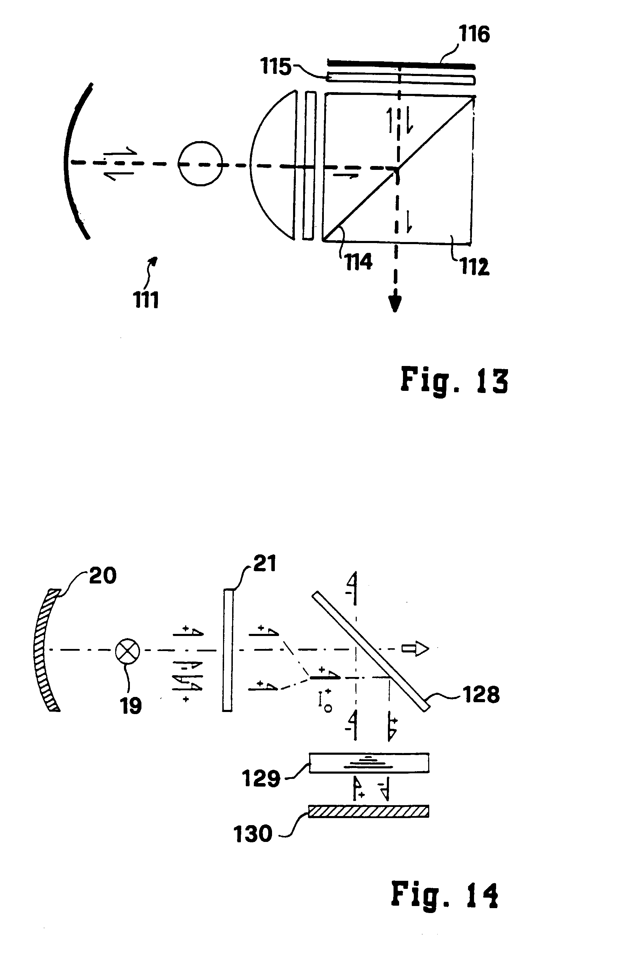

Beträgt beim doppelbrechenden Anteil die Phasenverschiebung zwischen den beiden im Flüssigkristall propagierenden Moden (n+1/2) mal die Wellenlänge (n=0,1,..), so ändert zirkular polarisiertes Licht den Drehsinn. Ist der Analysator drehsinnempfindlich (z.B. selektive Reflexion), so kann man genau so, wie bei Linearpolarisatoren, von hell auf dunkel schalten. Beim Arbeiten mit zirkular polarisiertem Licht kann also irgendeine Flüssigkristallanzeigezelle eingesetzt werden, deren Wirkung darauf beruht, dass die angelegte Spannung einen Gangunterschied von (n+1/2).λ zwischen geeignet definierten Polarisationsrichtungen bewirkt. Auf die neuen Betriebsarten der Flüssigkristallzellen wird am Ende dieser Beschreibung unter Bezugnahme auf die Fig. 14-17 näher eingegangen.

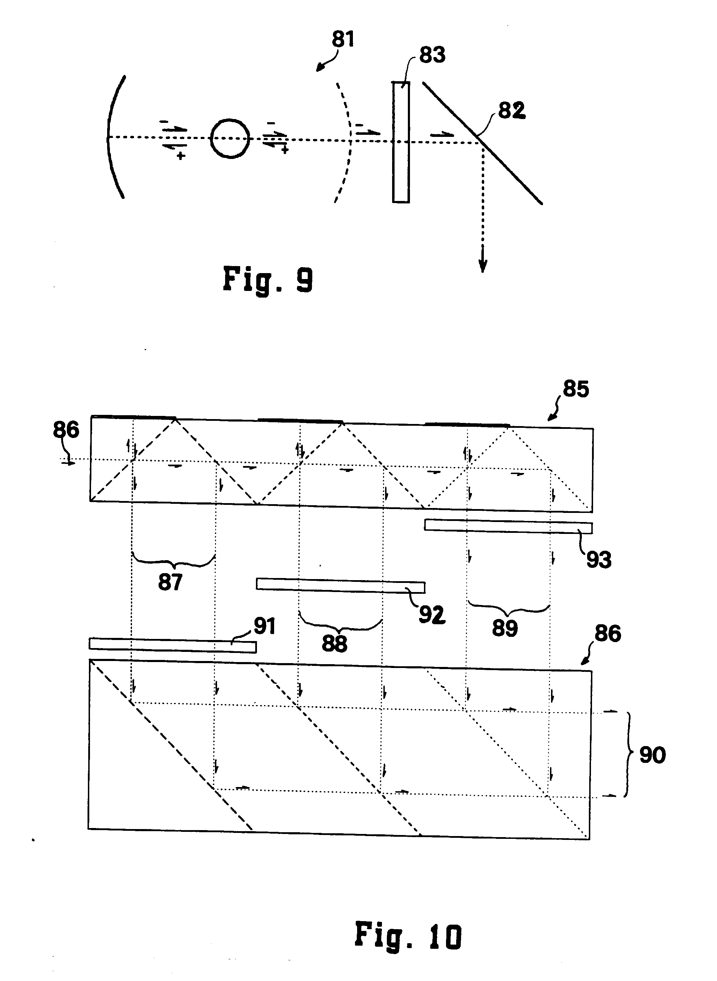

Fig. 9 zeigt ein monochromes Projektionssystem mit einer Lichtquelle 81 für zirkular polarisiertes Licht gemäss Fig. 2 und als Analysator 82 und Wellenlängenselektor einer einzigen cholesterischen Flüssigkristallschicht. Zwischen Polarisator 81 und Analysator 82 befindet sich eine Flüssigkristallanzeigezelle 83zur Modulation des Lichts. Beide cholesterischen Schichten im Polarisator und im Analysator können mehrschichtig sein, d.h. mehrere cholesterische Schichten mit verschiedenen aktiven Wellenlängenbereichen aufweisen, um eine weisse Farbwiedergabe zu ermöglichen.

Dieses und analoge Projektionssysteme mit anderen Polarisator/ Analysator-Kombinationen kann man auch dreifach für die drei Grundfarben oder auch mehr als dreifach ausführen und damit Mehrfarben-Projektionssysteme realisieren. Dabei genügt u.U. eine einzige Lampe. Der Vorteil einer drei oder mehrfachen Projektionsoptik ist u.a. der einfache Farbabgleich durch mechanische oder elektrooptische Blenden (z.B. Drehzellen) im Projektionssystem.

Fig. 10 zeigt ein Farb-Projektionssystem aus einem Polarisator 85 gemäss Fig. 6 und einem Analysator 86 gemäss Fig. 7. Das einfallende weisse, unpolarisierte Lichtbündel 86 wird gemäss der vorstehenden Beschreibung des Polarisators gemäss Fig. 6 in drei zirkular polarisierte Bündel 87, 88, 89 verschiedener Spektralbereiche zerlegt. In den Strahlengang der drei Bündel sind Flüssigkristallanzeigezellen 91-93 gesetzt, mit denen jede Farbe moduliert werden kann. Die drei Flüssigkristallanzeigezellen 91-93 sind dabei so positioniert, dass der optische Weg bis zum Projektionsobjektiv für alle drei gleich ist. Nach dem Durchgang und ggf. einer Modulation durch die Flüssigkristallzellen 91-93 werden die drei Lichtbündel im Analysator, wie im Zusammenhang mit Fig. 7 beschrieben wieder zu einem Bündel 90 kombiniert.

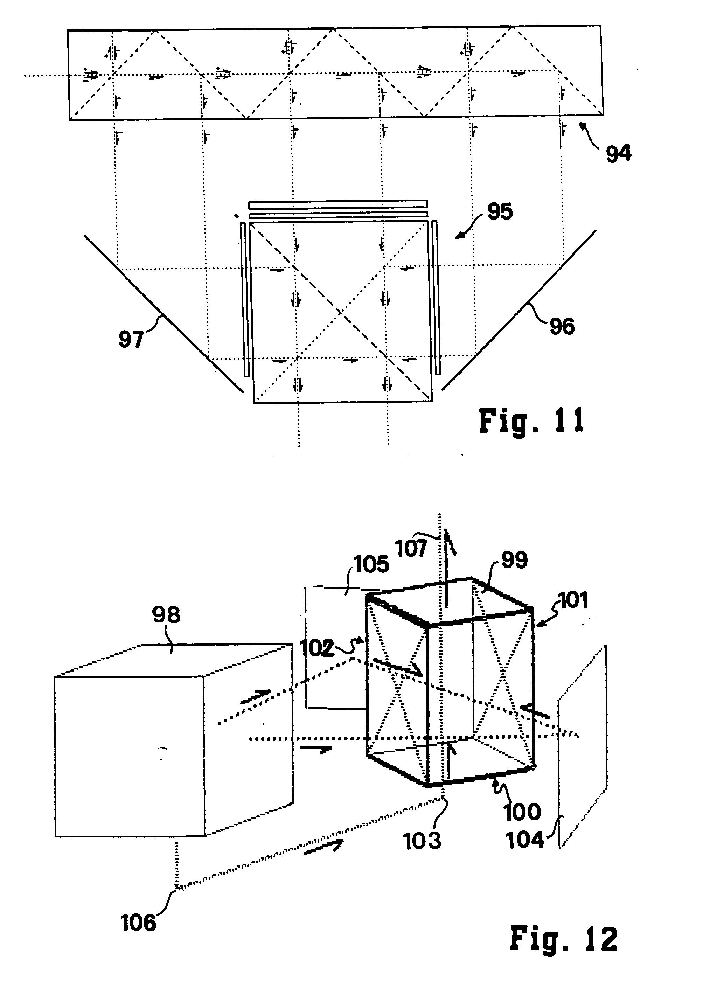

Fig. 11 zeigt eine Kombination eines Polarisators 94 gemäss Fig. 6 mit einem Analysator 95 gemäss Fig. 8. Zur Strahlumleitung werden gewöhnliche Oberflächenspiegel 96 und 97 verwendet.

Fig. 12 zeigt schliesslich eine Kombination einer Lichtquelle 98 gemäss Fig. 2 mit einem Analysator 99 gemäss Fig. 8. Die Lampe ist auf der Raumdiagonalen des Würfels 98 so angeordnet, dass man je zwei gegenüberliegenden Seiten dieses Würfels für die Anordnung der cholesterischen Schichten bzw. der jeweils gegenüberliegenden Spiegel ausnutzen kann. Dies ergibt mit einer Lichtquelle drei Strahlen, die in jeweiligen aktiven Wellenlängenbereich zirkular polarisiert sind. Der Analysator entspricht dem gemäss Fig. 8, die Flüssigkristallanzeigezellen sind auf den Flächen 100-102 angebracht. Der Umlenkspiegel 103 ist als farbselektiver Flüssigkristallspiegel ausgebildet. Die Spiegel 104-106 sind normale Oberflächenspiegel. Die drei Farben werden im Austrittsstrahl 107 wieder zusammengeführt.

Alle bisherigen Projektionssysteme waren transmissive Systeme. Die vorgeschlagenen Polarisatoren/Analysatoren eignen sich aber auch für reflektive Systeme. Vor allem bei sog. TFT-Anwendungen sind reflektive Projektionssysteme vorteilhaft, da der Lichtverlust am nicht transparenten Transistor wegfällt.

Fig. 13 zeigt ein Beispiel eines solchen Projektionssystems: Das Licht, das von einer Lichtquelle 111 gemäss Fig. 3 kommt, wird in einen Strahlteilerwürfel 112 an einer weiteren cholesterischen Schicht 114 geteilt, wobei nur die richtige Farbe mit der richtigen zirkularen Polarisation reflektiert wird, das restliche Licht wird durchgelassen.

Das Licht durchquert dann eine Flüssigkristallanzeigezelle 115 und wird am Spiegel 116 reflektiert, durchquert wieder die Zelle 115 und trifft auf den Strahlteiter 114, der seine zirkulare Polarisation analysiert und nun das reflektierte Licht passieren lässt, weil sein Polarisationssinn am Spiegel 116 umgedreht wurde. Das durchgelassene Licht kann projiziert oder zuerst mit Licht aus entsprechenden anderen Polarisatoren anderer Farbe kombiniert werden.

In einer mit integrierten aktiven elektronischen Elementen versehenen Flüssigkristallzelle (z.B. TFT, MIM, etc.) sind die vom Transistor jedes Pixels angesteuerten Elektroden als Spiegel ausgebildet. Die Gesamtheit dieser Elektroden bildet dann den Spiegel 116.

Da das Licht die Flüssigkristallanzeigezelle 115 zweimal durchquert, erfährt es auch die doppelte Phasenverschiebung, d.h. um den gleichen elektrooptischen Effekt zu erreichen, muss die Doppelbrechung nur halb so gross sein als bei einem gleich dicken transmissiven Display.

Die Anordnung lässt sich noch kompakter bauen, wenn für den cholesterischen Flüssigkristall, die Linse und der Würfel als Grenzflächen benutzt werden und wenn die Anzeigezelle ebenso den Würfel direkt als Grenzfläche benutzt.

Auf der Basis dieses monochromen Systems lassen sich analog zu den transmissiven Systemen alle möglichen Kombinationen der Polarisatoren/Analysatoren bilden.

Das in Fig.14 gezeigte, in Reflexion arbeitende Projektionssystem enthält wiederum Lichtquelle 19, Spiegel 20 und die das Licht in rechtsdrehend zirkulares umwandelnde cholesterische Flüssigkristallschicht 21 ähnlich wie in vorher beschriebenen Ausführungsbeispielen. Das von letzterer kommende Licht trifft auf eine cholesterische Flüssigkristallschicht 128 mit umgekehrtem Drehsinn, die unter einem Winkel von 45° im Strahlengang angeordnet ist. Dieser zweite cholesterische Filter lenkt den in seiner selektiven Bandbreite befindlichen Strahlenanteil als rechtssinnig zirkularen Strahl rechtwinklig ab zu einer Kombination aus Flüssigkristallanzeigezelle 129 und Spiegel 130. Die Zelle 129 besitzt, wie bereits für das Ausführungsbeispiel gemäss Fig.15 beschrieben, einen minimalen optischen Gangunterschied zwischen Ein- und Aus-Zustand von λ/2 oder einem ungradzahligen Vielfachen davon. Diese Zelle ändert somit die Drehrichtung des zirkular polarisierten Lichts in links zirkulares, dessen Drehsinn bei der Reflexion am Spiegel 130 wieder umgedreht wird. Das vom Spiegel 130 reflektierte rechts zirkulare Licht wird in der Zelle 129 wiederum in links zirkulares geändert und kann die Schicht 128 ungehindert passieren. Das ausserhalb der Bandbreite der cholesterischen Schicht 128 liegende Licht wird von dieser nicht abgelenkt und verlässt die Anordnung nach rechts.

Zur Herstellung der cholesterischen Schichten eignen sich vorzugsweise cholesterische Materialien mit einer Helixganghöhe p < 1,5 µm und einer optischen Anisotropie Δn > 0.09. Die "cholesterischen Materialien" können cholesterische Flüssigkristalle oder auch Glasphasen mit eingefrorener cholesterischer Struktur sein. Geeignete Materialien mit ausreichend breitem Temperaturbereich bei üblichen Betriebstemperaturen sind dem Fachmann bekannt.

Das Material zur Herstellung der cholesterischen Schichten kann vorzugsweise ein Flüssigkristall-Seitenkettenpolymer mit chiraler Seitenkette sein, welches eine cholesterische Flüssigkristallphase oder eine Glasphase mit cholesterischer Struktur besitzt und ferner eine Helixganghöhe p < 1,5 µm und eine optische Anisotropie Δn > 0.09 aufweist. Solche Polymere sind bekannt und zum Teil im Handel erhältlich. Beispielsweise eignen sich die beim Konsortium für elektrochem. Industrie, München unter den folgenden Typenbezeichnungen erhältlichen Polysiloxane mit cholesterischer Seitenkette:

| Typenbezeichnung | Maximum der selektiven Reflexion |
|---|---|
| W 2648 | 0,658 µm |
| W 2649 | 0,540 µm |
| C 4754 | 0,540 µm |
| C 4768 | 0,678 µm |
| C 4760 | 0,600 µm |
| C 4745 | 0,460 µm |

Diese Polymere besitzen eine Glasübergangstemperatur von ca. 50°C und einen Klärpunkt von ca. 180°C. Die Breite der Reflexionsbande beträgt ca. 60 nm.

Das Material zur Herstellung der cholesterischen Schichten kann ferner vorzugsweise ein cholesterisches Flüssigkristallgemisch mit einer optischen Anisotropie Δn > 0.09 sein bestehend aus einem nematischen Basismaterial und einem oder mehreren chiralen Dotierstoffen in einer Menge, die in der nematischen Matrix eine Verdrillung mit der gewünschten Helixganghöhe p < 1,5 µm induziert.

Das nematische Basismaterial sollte eine ausreichend breite nematische Mesophase aufweisen und kann vorzugsweise aus zwei oder mehreren Komponenten bestehen. Geeignete Komponenten und Mischungen sind in grosser Zahl bekannt. Sie wurden vor allem im Zusammenhang mit Flüssigkristall anzeigevorrichtungen beschrieben und viele davon sind im Handel erhältlich. Eine Aufstellung solcher Materialien mit Literaturhinweisen ist z.B. in D. Demus et al., Flüssige Kristalle in Tabellen, VEB Deutscher Verlag für Grundstoffindustrie, Leipzig, Band 1 (1976) und Band 2 (1984) enthalten. Die gewünschte optische Anisotropie Δn > 0.09 kann leicht dadurch erreicht werden, dass Komponenten gewählt werden, in denen mindestens etwa die Hälfte der Ringe aromatisch ist bzw. im Falle von Gemischen der Anteil an solchen Komponenten ausreichend hoch gewählt wird.

Geeignete chirale Dotierstoff sind dem Fachmann ebenfalls bekannt z.B. aus EP-A-0 213 841, aus WO 87/05017 und aus der Europäischen Patentanmeldung 89.106808.2. Der Anteil an chiralen Dotierstoffen im cholesterischen Gemisch richtet sich nach der gewünschten Helixganghöhe und kann von Fall zu Fall leicht ermittelt werden. Falls erwünscht kann ferner eine allfällige Temperaturabhängigkeit der Helixganghöhe kompensiert werden nach den in DE-A-2827471 und EP-A-0304738 beschriebenen Methoden.

Zusätzlich zur Temperaturkompensation der Helixganghöhe der verwendeten cholesterischen Mischungen ist es vorteilhaft, auch die Temperaturabhängigkeit der Brechungsindizes zu kompensieren.

Bevorzugte chirale Dotierstoffe sind die optisch aktiven Verbindungen der allgemeinen Formel 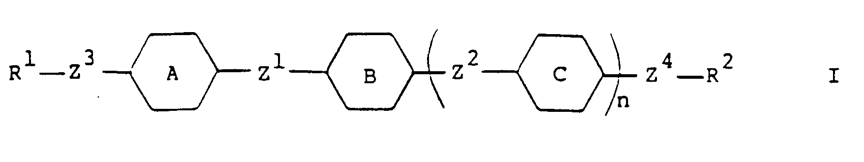 worin n für die Zahl 0 oder 1 steht; die Ringe A, B und C unabhängig voneinander unsubstituiertes oder mit Halogen, Cyano, Methyl und/oder Methoxy substituiertes 1,4-Phenylen bedeuten, in welchem gegebenenfalls 1 oder 2 CH-Gruppen durch Stickstoff ersetzt sind, oder einer der Ringe A, B und C auch trans-1,4-Cyclohexylen bedeutet; z¹ und Z² unabhängig voneinander eine ein- fache Kovalenzbindung, -CH₂CH₂-, -OCH₂-, -CH₂O-, -COO-oder -OOC- bezeichnen; Z³ und Z⁴ unabhängig voneinander eine einfache Kovalenzbindung, Sauerstoff, -COO- oder -OOC- bezeichnen; R¹ und R² unabhängig voneinander das Radikal eines optisch aktiven Terpenalkohols nach Abspaltung der Hydroxygruppe oder eine chirale Gruppe -C^{*}HX¹-R³, -CH₂-C^{*}HX¹-R³, -C^{*}H(CH₃)-COOR³, -C *HR⁴-COOR³, -C*H(CH₃)-CH₂OR³, -C*H(CH₃)-CH₂COOR³, oder -C*H(CH₃)-CH₂CH₂OR³ darstellen; C* ein chirales Kohlenstoffatom bezeichnet; X¹ Fluor, Chlor, Cyano, Methyl, Hydroxy, Methoxy oder Methoxycarbonyl darstellt; R³ Alkyl oder Alkenyl bedeuten, und R⁴ Phenyl bezeichnet.

In obiger Formel I bezeichnen vorzugsweise Z¹ und Z² je eine einfache Kovalenzbindung. Ferner sind vorzugsweise alle Ringe A, B und C aromatisch, insbesondere 1,4-Phenylen. Z³ steht vorzugsweise für -OOC- und Z⁴ steht vorzugsweise für -COO-.

Eine bevorzugte Gruppe von chiralen Dotierstoffen sind jene optisch aktiven Verbindungen der Formel I, worin n für die Zahl 1 steht; die Ringe A, B und C unabhängig voneinander unsubstituiertes oder mit Halogen, Cyano, Methyl und/oder Methoxy substituiertes 1,4-Phenylen bedeuten, in welchem gegebenenfalls 1 oder 2 CH-Gruppen durch Stickstoff ersetzt sind; Z¹ und Z² je eine einfache Kovalenzbindung bezeichnen; Z³ -OOC- und Z⁴ -COO- bedeuten; R¹ und R² unabhängig voneinander das Radikal eines optisch aktiven Terpenalkohols nach Abspaltung der Hydroxygruppe oder eine chirale Gruppe -CH*X¹-R³ oder -CH₂-C*HX¹-R³ darstellen; C* ein chirales Kohlenstoffatom bezeichnet; X¹ Fluor, Chlor, Cyano, Methyl oder Methoxy darstellt; und R³ Alkyl oder Alkenyl bedeutet.

Der Ausdruck "unsubstituiertes oder mit Halogen, Cyano, Methyl und/oder Methoxy substituiertes 1,4-Phenylen, in welchen gegebenenfalls 1 oder 2 CH-Gruppen durch Stickstoff ersetzt sind" umfasst im Rahmen der vorliegenden Erfindung Gruppen wie 1,4-Phenylen, Fluor-1,4-phenylen, Chlor-1,4-phenylen, Cyano-1,4-phenylen, 2,3-Dicyano-1,4-phenylen, Methyl-1,4-phenylen, Methoxy-1,4-phenylen, Pyridin-2,5-diyl, Pyrimidin-2,5-diyl, Pyrazin-2,5-diyl, Pyridazin-3,6-diyl und dergleichen.

Der Ausdruck "Halogen" umfasst Fluor, Chlor, Brom und Jod, vorzugsweise Fluor und Chlor.

Der Ausdruck "Radikal eines optisch aktiven Terpenalkohols nach Abspaltung der Hydroxygruppe" bezeichnet die Gruppe T eines optisch aktiven Terpenalkohols der Formel TOH. Der Ausdruck "Terpenalkohol" ist dem Fachmann geläufig z.B. aus Römpps Chemie Lexikon, Band 6 (1977), und bezeichnet die von Monoterpenen abgeleiteten Alkohole. Der Ausdruck "Monoterpen" umfasst Terpenkohlenwasserstoff C₁₀H₁₆ und deren Hydrierungs- und Dehydrierungsderivate. Beispiele bevorzugter optisch aktiver Terpenalkohole sind (1R,2S,5R)-(-)-Menthol, (1S,2R,5R)-(+)-Isomenthol, (1S,2S,3S,5R)-(+)-Isopinocampheol, (1S)-(-)-Borneol, (1R)-(-)-Myrtenol, (1S,2S,5R)-(+)-Neomenthol, (-)-Carveol, (+)-Dihydrocarveol, (+)-Terpinen-4-ol, (+)-α-Terpineol und dergleichen.

Die Ausdrücke "Alkyl" und "Alkenyl" umfassen geradkettige und verzweigte Reste mit vorzugsweise höchstens 15 Kohlenstoffatomen, wie Methyl, Aethyl, Propyl, Isopropyl, Butyl, Isobutyl, Pentyl, Hexyl, Heptyl, Octyl, Nonyl, Vinyl, 1-Propenyl, 1-Butenyl, 1-Pentenyl, Allyl, 2-Butenyl, 2-Pentenyl, 3-Butenyl, 3-Pentenyl, 4-Pentenyl, 5-Hexenyl, 6-Heptenyl und dergleichen.

Die Herstellung der chiralen Dotierstoff ist in den oben angegebenen Literaturstellen beschrieben oder kann nach analogen Methoden erfolgen.

Die folgenden Mischungen sind Beispiele bevorzugter cholesterischer Gemische. Die Helixganghöhe p wurde bei 22°C gemessen. Ferner bezeichnet im folgenden C eine kristalline, S_{C}^{*} eine chiral smektisch C, S_{A} eine smektisch A, Ch eine cholesterische und I die isotrope Phase.

### Mischung 1

- 32,75 Gew.-%: 4'-Pentyl-4-cyanobiphenyl,
- 18,01 Gew.-%: 4'-Heptyl-4-cyanobiphenyl,
- 11,46 Gew.-%: 4'-Octyloxy-4-cyanobiphenyl,
- 5,73 Gew.-%: 4"-Pentyl-4-cyano-p-terphenyl,
- 4,09 Gew.-%: 4-[5-(4-Butylphenyl)-2-pyrimdinyl]benzonitril,
- 4,91 Gew.-%: 4-[5-(trans-4-Aethylcyclohexyl)-2-pyrimidinyl]-benzonitril,
- 4,91 Gew.-%: 4-[5-(trans-4-Pentylcyclohexyl)-2-pyrimidinyl]-benzonitril,
- 18,14 Gew.-%: 4'-[2(S)-Methylbutyl]-4-[2(R)-octyloxycarbonyl]biphenyl;
p = 0.320 µm, Helixdrehsinn rechts T_{c} = 45°C, Δn = 0.24

### Mischung 2

- 3,86 Gew.-%: 4'-Aethyl-4-cyanobiphenyl,
- 2,29 Gew.-%: 4'-Propyl-4-cyanobiphenyl,
- 4,37 Gew.-%: 4'-Butyl-4-cyanobiphenyl,
- 4,71 Gew.-%: 4-(trans-4-Propylcyclohexyl)benzonitril,
- 10,57 Gew.-%: 4-(trans-4-Pentylcyclohexyl)benzonitril,
- 13,75 Gew.-%: 1-(trans-4-Propylcyclohexyl)-4-äthylbenzol,
- 11,91 Gew.-%: 1-[2-(trans-4-Propylcyclohexyl)äthyl]-4-äthoxybenzol,
- 4,03 Gew.-%: 4˝-Pentyl-4-cyano-p-terphenyl,
- 4,11 Gew.-%: 4′-(trans-4-Pentylcyclohexyl)-4-cyanobiphenyl,
- 11,49 Gew.-%: 1-[2-(trans-4-Butylcyclohexyl)äthyl]-4-(trans-4-pentylcyclohexyl)benzol,
- 3,41 Gew.-%: 4′-[2-(trans-4-Butylcyclohexyl)äthyl]-4-(trans-4-pentylcyclohexyl]biphenyl,
- 5,46 Gew.-%: 4′-[2-(trans-4-Butylcyclohexyl)äthyl]-4-(trans-4-pentylcyclohexyl)-1,1′-äthylendibenzol,
- 2,04 Gew.-%: trans-4-[2-(trans-4-Propylcyclohexyl)äthyl]cyclohexancarbonsäure-4-cyanophenylester,
- 18,00 Gew.-%: 4,4˝-Di-[2(S)-octyloxycarbonyl]-p-terphenyl;
p = 0.340 µm, Helixdrehsinn links
T_{c} = 60°C, Δn = 0.14

### Mischung 3

- 31,06 Gew.-%: 4′-Pentyl-4-cyanobiphenyl,
- 15,22 Gew.-%: 4′-Heptyl-4-cyanobiphenyl,
- 9,74 Gew.-%: 4′-Octyloxy-4-cyanobiphenyl,
- 15,00 Gew.-%: 1-(trans-4-Propylcyclohexyl)-4-äthylbenzol,
- 4,87 Gew.-%: 4˝-Pentyl-4-cyano-p-terphenyl,
- 4,15 Gew.-%: 4-[5-(trans-4-Aethylcyclohexyl)-2-pyrimidinyl]benzonitril,
- 4,15 Gew.-%: 4-[5-(trans-4-Pentylcyclohexyl)-2-pyrimidinyl]benzonitril,
- 15,81 Gew.-%: 4,4˝-Di-[2(S)-octyloxycarbonyl]-p-terphenyl;
p = 0.373 µm, Helixdrehsinn links
T_{c} = 45°C, Δn = 0.23

### Mischung 4

- 32,89 Gew.-%: 4′-Pentyl-4-cyanobiphenyl,
- 16,12 Gew.-%: 4′-Heptyl-4-cyanobiphenyl,
- 10,31 Gew.-%: 4′-Octyloxy-4-cyanobiphenyl,
- 10,00 Gew.-%: 1-(trans-4-Propylcyclohexyl)-4-äthylbenzol,
- 5,16 Gew.-%: 4˝-Pentyl-4-cyano-p-terphenyl,
- 4,39 Gew.-%: 4-[5-(trans-4-Aethylcyclohexyl)-2-pyrimidinyl]benzonitril,
- 4,39 Gew.-%: 4-[5-(trans-4-Pentylcyclohexyl)-2-pyrimidinyl]benzonitril,
- 16,74 Gew.-%: 4,4˝-Di-[2(S)-octyloxycarbonyl]-p-terphenyl;
p = 0.453 µm, Helixdrehsinn links
T_{c} = 53°C, Δn = 0.24

### Mischung 5

- 29,34 Gew.-%: 4′-Pentyl-4-cyanobiphenyl,
- 14,39 Gew.-%: 4′-Heptyl-4-cyanobiphenyl,
- 9,21 Gew.-%: 4′-Octyloxy-4-cyanobiphenyl,
- 17,50 Gew.-%: 1-[2-(trans-4-Propylcyclohexyl)äthyl]-4-äthylbenzol,
- 4,60 Gew.-%: 4˝-Pentyl-4-cyano-p-terphenyl,
- 3,93 Gew.-%: 4-[5-(trans-4-Aethylcyclohexyl)-2-pyrimidinyl]benzonitril,
- 3,93 Gew.-%: 4-[5-(trans-4-Pentylcyclohexyl)-2-pyrimidinyl]benzonitril,
- 17,10 Gew.%: 4,4˝-Di-[2(S)-octyloxycarbonyl]-p-terphenyl;
p = 0.365, Δn = 0.23, Helixdrehsinn links
T_{c} = 45°C

Weitere Beispiel bevorzugter chiraler Dotierstoffe der Formel I sind die folgenden Verbindungen:
4,4˝-Di-[2(R)-cyano-1-propyloxycarbonyl]-p-terphenyl, Smp. 179,2°C;
4,4˝-Di-[2(S)-chlor-1-pentyloxycarbonyl]-p-terphenyl, Smp. (C-S_{C}*) 106°C, S_{C}*-S_{A} 110,2°C, S_{A}-Ch 140°C, Klp. (Ch-I) 141°C;
4,4"-Di-[2(R)-chlor-4-methyl-1-pentyloxycarbonyl]-p-terphenyl, Smp. 169,4-170,0°C;
4,4"-Di-[2(S)-cyano-4-methyl-1-pentyloxycarbonyl]-p-terphenyl, Smp. 129-131°C;
4,4"-Di-[1(R),2(S),5(R)-menthyloxycarbonyl]-p-terphenyl, Smp. 168-169°C;
4,4"-Di-[2(R)-cyano-1-pentyloxycarbonyl]-p-terphenyl;
4,4"-Di-[2(S)-chlor-1-butyloxycarbonyl]-p-terphenyl, Smp. (C-S_{A}) 137,3°C, S_{A}-Ch139,3°C, Klp. (Ch-I) 153°C;
4,4"-Di-[2(S)-cyano-1-butyloxycarbonyl]-p-terphenyl, Smp. 129,9°C;
4,4"-Di-[2(R)-cyano-1-hexyloxycarbonyl]-p-terphenyl; 4,4"-Di-[2(S)-chlor-3-methyl-1-butyloxycarbonyl]-p-terphenyl, Smp. 171,1°C;
4,4"-Di-[2(R)-cyano-3-methyl-1-butyloxycarbonyl]-p-terphenyl, Smp. 132,9°C;
4,4"-Di-[1(S)-(methoxycarbonyl)äthoxy]-p-terphenyl, Smp. 142,6°C;
4,4"-Di-[1(S)-(äthoxycarbonyl)äthoxy]-p-terphenyl, Smp. 91,3°C;
4,4"-Di-[1(S)-methyl-2-(äthoxycarbonyl)äthoxy]-p-terphenyl. 4,4"-Di-[2(S)-cyano-4-methyl-1-pentyloxy]-p-terphenyl, Smp. 116°C;
4,4"-Di-[2(S)-pentyloxycarbonyl]-p-terphenyl, Smp. 82.8°C;
4,4"-Di-[2(S)-chlor-4-methyl-1-pentyloxy]-p-terphenyl, Smp. 170°C

Für beide Betriebsarten der Flüssigkristallanzeigezellen, d.h. diejenige mit linear polarisiertem ebenso wie diejenige mit zirkular polarisiertem Licht, können sowohl flache als auch steile Transmissionscharakteristiken erzielt werden. Somit sind also sowohl flache Kurven mit vielen Grauwerten für Fernsehanwendungen, als auch steile Kurven und somit hoch multiplexierbare Zellen, beispielsweise steile Supertwist-Zellen geeignet.

Falls die Lichteinfallswinkel grösser sind als 35°, tritt unpolarisiertes Restlicht an den Flüssigkristallanzeigezellen in Projektionssystemen, wie beispielsweise dem gemäss Fig.10, auf. Um eine dadurch verursachte Kontrastreduktion zu unterdrücken, kann das unpolarisierte Restlicht durch zusätzliche, mit den Flüssigkristallanzeigezellen in Serie geschaltete Polarisatoren unterdrückt werden. Der Anteil an unpolarisertem Restlicht ist sehr gering, so dass sich durch die zusätzlichen Polarisatoren nur eine unwesentliche Abschwächung der Projektionseffizienz ergibt.

Die in dieser Beschreibung bereits erwähnte Anordnung mehrerer cholesterischer Flüssigkristallschichten unterschiedlicher spektraler Selektivität hintereinander kann natürlich nicht nur zur Annäherung an weisses Licht eingesetzt werden, sondern einfach zur Erweiterung der Bandbreite eines cholesterischen Filters für einen Farbbereich. Durch geeignete Kombinationen von cholesterischen Flüssigkristallfiltern unterschiedlicher mittlerer Wellenlängen können auf einfache Weise die Bandbreiten der selektiven Reflexion verändert werden.

## Patentansprüche

1. Polarisator zur Erzeugung zirkular polarisierten Lichts aus unpolarisiertem Licht mit einer im Strahlengang des Lichts angeordneten Schicht (1) aus einem cholesterischen Flüssigkristall mit Grandjean-Struktur und einen den Drehsinn zirkular polarisierten Lichts umkehrenden Spiegel (2) gegenüber der Lichteinfallsseite der Flüssigkristallschicht im Strahlengang des von der Flüssigkristallschicht reflektierten Lichts, dadurch gekennzeichnet, dass der Spiegel eine Blende (3) besitzt und dass sich die Lichtquelle auf der von der Flüssigkristallschicht abgewandten Seite des Spiegels befindet, so dass das Licht durch die Blende auf die Flüssigkristallschicht einfällt.

2. Polarisator nach Anspruch 1, dadurch gekennzeichnet, dass auf der von der Flüssigkristallschicht abgewandten Seite des Spiegels eine künstliche Lichtquelle angeordnet ist.

3. Polarisator nach einem der Ansprüche 1-2, dadurch gekennzeichnet, dass mehrere Flüssigkristallschichten (1) mit unterschiedlicher spektraler Selektivität hintereinander angeordnet sind.

4. Polarisator nach einem der Ansprüche 1-3, dadurch gekennzeichnet, dass hinter der Flüssigkristallschicht eine λ/4-Platte angeordnet ist.

5. Polarisator zur Erzeugung mehrerer getrennter Strahlen zirkular polarisierten Lichts mit unterschiedlichem Drehsinn oder unterschiedlicher spektraler Zusammensetzung aus einfallendem unpolarisierten Licht, gekennzeichnet durch mindestens zwei im Strahlengang des einfallenden Lichts (33) hintereinander unter einem Winkel von 45° zu diesem Strahlengang angeordnete Schichten (29,30; 48-53) aus cholesterischen Flüssigkristallen mit Grandjean-Struktur und einen lichteinfallsseitig im Strahlengang des an der cholesterischen Flüssigkristallschicht reflektierten Lichts angeordneten, zum einfallenden Licht parallelen Spiegel (32,37,54,55).

6. Polarisator nach Anspruch 5, dadurch gekennzeichnet, dass die Flüssigkristallschicht beidseitig durch die planen Flächen von drei- oder vierseitigen Prismen (26-28; 36, 41-46; 63-66) mit spitzen Winkeln von 45° begrenzt sind.

7. Vorrichtung zur Erzeugung polarisierten Lichts, gekennzeichnet durch eine künstliche Lichtquelle (12) zur Erzeugung unpolarisierten Lichts, eine zur Lichtquelle konzentrisch angeordnete sphärische Schicht (13) aus einem cholesterischen Flüssigkristall mit Grandjean-Struktur, einen zur Lichtquelle konzentrischen sphärischen, den Drehsinn eines einfallenden zirkular polarisierten Lichtstrahls umdrehenden Spiegel (15), der der Flüssigkristallschicht in Bezug auf die Lichtquelle gegenüber liegt.

8. Vorrichtung nach Anspruch 7, dadurch gekennzeichnet, dass die Flüssigkristallschicht (13) mehrere cholesterische Schichten mit unterschiedlicher spektraler Selektivität hintereinander aufweist.

9. Vorrichtung nach Anspruch 7, dadurch gekennzeichnet, dass hinter der Flüssigkristallschicht eine λ/4-Platte angeordnet ist.

10. Projektionssystem gekennzeichnet durch einen ersten Polarisator nach einem der Ansprüche 1, 5 und 7, einen zweiten, als Analysator angeordneten Polarisator nach einem der Ansprüche 1, 5 und 7, und einer zwischen dem ersten und dem zweiten Polarisator angeordneten Flüssigkristallanzeigezelle (91-93) zur Modulation der Intensität des polarisierten Lichts.

## Claims

1. A polarizer for producing circular-polarized light from non-polarized light with a layer (1) of a cholesteric liquid crystal having a Grandjean structure disposed in the path of the rays of the light, and a mirror (2) for reversing the direction of rotation of circular-polarized light opposite the incident light side of the liquid crystal layer in the path of the rays of the light reflected by the liquid crystal layer, characterised in that the mirror has an aperture (3) and in that the light source is disposed on that side of the mirror which is remote from the liquid crystal layer so that the light is incident on the liquid crystal layer through the aperture.

2. A polarizer according to claim 1, characterised in that an artificial light source is disposed on that side of the mirror which is remote from the liquid crystal layer.

3. A polarizer according to claim 1 or 2,
characterised in that a plurality of liquid crystal layers (1) having different spectral selectivity are disposed consecutively.

4. A polarizer according to any one of claims 1 to 3, characterised in that a λ/4 plate is disposed after the liquid crystal layer.

5. A polarizer for producing a plurality of separate rays of circular-polarized light having different directions of rotation or different spectral composition from non-polarized incident light, characterised by at least two layers (29, 30; 48 - 53) of cholesteric liquid crystals having a Grandjean structure disposed consecutively in the path of the rays of the incident light (33) at an angle of 45° to said rays, and a mirror (32, 37, 54, 55) parallel to the incident light and disposed on the incident light side in the path of the rays of the light reflected at the cholesteric liquid crystal layer.

6. A polarizer according to claim 5, characterised in that the liquid crystal layers are defined on both sides by the flat surfaces of three-sided or four-sided prisms (26 - 28; 36, 41 - 46; 63 - 66) having angles of 45° at the apex.

7. Apparatus for producing polarized light, characterised by an artificial light source (12) for producing non-polarized light, a spherical layer (13) of a cholesteric liquid crystal having a Grandjean structure disposed concentrically to the light source, a spherical mirror (15) concentric to the light source and reversing the direction of rotation of an incident circular-polarized ray of light, said mirror (15) being situated opposite the liquid crystal layer with respect to the light source.

8. Apparatus according to claim 7, characterised in that the liquid crystal layer (13) comprises a plurality of cholesteric layers having different spectral selectivity consecutively.

9. Apparatus according to claim 7, characterised in that a λ4 plate is disposed after the liquid crystal layer.

10. A projection system characterised by a first polarizer according to any one of claims 1, 5 and 7, a second polarizer arranged as an analyser, according to any one of claims 1, 5 and 7, and a liquid crystal display cell (91 - 93) disposed between the first and second polarizers for modulating the intensity of the polarized light.

## Revendications

1. Polariseur pour la production d'une lumière polarisée circulaire à partir de lumière non polarisée avec une couche (1) d'un cristal liquide cholestérique à structure de Grandjean disposée dans la marche des rayons et un miroir (2) inversant le sens de rotation de la lumière polarisée circulaire, vis-à-vis du côté d'incidence de la lumière de la couche de cristal liquide dans la marche des rayons de la lumière réfléchie par la couche de cristal liquide, caractérisé en ce que le miroir possède un diaphragme (3) et en ce que la source de lumière se trouve du côté du miroir orienté à l'opposé de la couche de cristal liquide, de manière que la lumière pénètre dans la couche de cristal liquide en passant par le diaphragme.

2. Polariseur selon la revendication 1, caractérisé en ce que du côté du miroir orienté à l'opposé de la couche de cristal liquide est disposée une source de lumière artificielle.

3. Polariseur selon l'une des revendications 1-2, caractérisé en ce que plusieurs couches de cristaux liquides (1) à sélectivité spectrale différente sont disposées l'une derrière l'autre.

4. Polariseur selon l'une des revendications 1-3, caractérisé en ce que derrière la couche de cristal liquide est disposée une plaque λ/4.

5. Polariseur pour la production de plusieurs rayons séparés de lumière polarisée circulaire à sens de rotation différent ou à composition spectrale différente à partir d'une lumière incidente non polarisée, caractérisé par au moins deux couches (29,30; 48-53) de cristaux liquides cholestériques à structure de Grandjean disposées l'une derrière l'autre dans la marche des rayons de la lumière incidente (33) sous un angle de 45° par rapport à cette marche, et par un miroir (32, 37, 54, 55) parallèle à la lumière incidente, disposé du côté d'incidence de la lumière dans la marche des rayons de la lumière réfléchie sur la couche de cristal liquide cholestérique.

6. Polariseur selon la revendication 5, caractérisé en ce que la couche de cristal liquide est limitée des deux côtés par les surfaces planes de prismes à trois ou quatre côtés (26-28; 36, 41-46; 63-66) avec des angles aigus de 45°.

7. Dispositif de production de lumière polarisée, caractérisé par une source de lumière artificielle (12) pour la production de lumière non polarisée, une couche sphérique (13) disposée concentriquement par rapport à la source de lumière et faite d'un cristal iquide cholestérique à structure de Grandjean, un miroir sphérique (15) concentrique par rapport à la source de lumière, inversant le sens de rotation d'un courant lumineux polarisé circulaire incident, qui se trouve vis-à-vis de la couche de cristal liquide par rapport à la source de lumière.

8. Dispositif selon la revendication 7, caractérisé en ce que la couche de cristal liquide (13) présente plusieurs couches cholestériques l'une derrière l'autre, à sélectivité spectrale différente.

9. Dispositif selon la revendication 7, caractérisé en ce que derrière la couche de cristal liquide est disposée une plaque λ/4.

10. Système de projection caractérisé par un premier polariseur selon l'une des revendications 1, 5 et 7, un second polariseur disposé comme analyseur selon l'une des revendications 1, 5 et 7, et une cellule à cristaux liquides (91-93) disposée entre le premier et le second polariseur aux fins de modulation de l'intensité de la lumière polarisée.
